# EUROPEAN PATENT APPLICATION

(11) **EP 1 974 788 A1**
(43) Date of publication of application: **01.10.2008**
(21) Application number: 07019177.0
(22) Date of filing: 28.09.2007
(51) Int. Cl.: B01D 39/00

(54) **Honeycomb structure**

(30) Priority: 29.03.2007 WO PCT/JP2007/056965
(71) Applicant: IBIDEN CO., LTD., Ogaki-shi Gifu 503-8604 (JP)
(72) Inventor: Oshimi, Yukio, Ibi-gun Gifu 501-0695 (JP)
(74) Representative: HOFFMANN EITLE

(57) **Abstract**

A honeycomb structure is provided which has a ceramic block having two ends, and is configured as a result of a plurality of honeycomb units comprising cell walls, which define a plurality of cells which extend from one end to the other end are bonded by interposing bonding layers, and a coat layer provided on an outer peripheral surface of the ceramic block, and a plurality of heat absorbing materials are provided to at least one selected from among the cell walls, the coat layer and the bonding layer.

## Description

### TECHNICAL FIELD

The present invention relates to a honeycomb structure.

### BACKGROUND ART

Various kinds of exhaust gas processing apparatuses for internal combustion engines such as vehicles, construction machines and so forth, have been proposed and put into practical uses. A common exhaust gas treating apparatus has such a configuration that, in the middle of an exhaust pipe connected to an exhaust gas manifold of an engine, for example a casing made of a metal or such is provided, and a honeycomb structure is placed therein. The honeycomb structure acts as a filter (DPF: Diesel Particulate Filter) for catching particulates included in an exhaust gas, and purifying the exhaust gas.

Commonly, in a honeycomb structure used as a DPF, a plurality of pillar-shaped cells extending in a longitudinal direction defined by porous cell walls are configured. Each cell has any end sealed by a sealing material, thus, an exhaust gas introduced into the honeycomb structure necessarily passes through the cell walls, and then, is discharged to the outside of the honeycomb structure. Accordingly, particulates or such in the exhaust gas can be caught when the exhaust gas passes through the cell walls.

Such a honeycomb structure is configured, for example, as a result of a plurality of pillar-shaped honeycomb units being bonded by interposing bonding layers. Further, commonly, the honeycomb structure has a coat layer on an outer peripheral surface except an opening end corresponding to a cell opening end. The coat layer functions to adjust an outer peripheral shape of the honeycomb structure.

In the prior art, for a honeycomb structure having a configuration such as that described above, various methods have been proposed to improve durability of the honeycomb structure (for example, Patent Documents 1 and 2).
Patent Document 1: Japanese Patent No. 3121497; and
Patent Document 2: Japanese Laid-Open Patent Application No. 2001-162121

### DISCLOSURE OF THE INVENTION

### PROBLEMS TO BE SOLVED BY THE INVENTION

A honeycomb structure once used as a filter undergoes regeneration treating (restoring processing for making it possible to reuse the filter) for removing caught particulates, if necessary. In the regeneration treating, the temperature of the honeycomb structure increases by heat of combustion of the particulates. Especially, on the side of an exhaust gas outlet of the honeycomb structure in which a large amount of particulates are caught, the temperature may increase remarkably (for example, 500°C through 1000°C). When the temperature of the honeycomb structure suddenly increases in its part, a heat stress may be applied to the part due to a temperature slope from the other parts, and thus, a risk that the honeycomb structure is damaged in the part increases much.

The present invention has been devised in consideration of this problem, and an object of the present invention is to provide a honeycomb structure which is not likely to be damaged as mentioned above even when the temperature changes suddenly as in reuse processing.

### MEANS TO SOLVE THE PROBLEMS

According to the present invention, a honeycomb structure is provided which has a ceramic block having two ends, configured as a result of a plurality of honeycomb units, comprising cell walls which define a plurality of cells which extend from one end to the other end, being bonded by interposing bonding layers, and a coat layer provided on an outer peripheral surface of the ceramic block, wherein:
a plurality of heat absorbing materials are provided to at least one part selected from among the cell walls, the coat layer and the bonding layers.

Further, according to the present invention, a honeycomb structure is provided which has two ends and an outer peripheral surface, and comprising cell walls which define a plurality of cells which extend from one end to the other, and a coat layer provided on the outer peripheral surface, wherein:
at least one from between the cell walls and the coat layer has a plurality of heat absorbing materials.

There, the plurality of heat absorbing materials may preferably contain two or more selected from among a group including ammonium hydroxide, calcium aluminate, dawsonite, magnesium hydroxide, zinc borate, calcium hydroxide, kaolin clay, calcium carbonate and barium oxalate.

Further, at least one of the plurality of heat absorbing materials may preferably be contained in a range between 0.5 and 9.0 weight percent with respect to the cell walls, the coat layer or the bonding layers.

### ADVANTAGEOUS EFFECTS OF THE INVENTION

In the present invention, the honeycomb structure has the heat absorbing materials, thereby a sudden temperature rise in the honeycomb structure can be avoided by means of the heat absorbing materials, and thus, it is possible to provide the honeycomb structure which is not likely to be damaged even when it is used in such a condition that a temperature suddenly changes as in regeneration treating.

### BRIEF DESCRIPTION OF DRAWINGS

FIG. 1 is a perspective view schematically showing a honeycomb structure in the present invention.
FIG. 2 is a perspective view schematically showing a honeycomb unit included in the honeycomb structure in the present invention.
FIG. 3 is a sectional view taken along a A-A line of the honeycomb unit shown in FIG. 2.
FIG. 4 schematically shows a sectional view of a laminate body of honeycomb units before a paste for bonding layers is filled with therein, taken vertically to a longitudinal direction.
FIG. 5 schematically shows a sectional view of a filling unit for filling spaces in the laminate body of honeycomb units with the paste for bonding layers, taken vertically with respect to the longitudinal direction.
FIG. 6 schematically shows a sectional view of the filling unit for filling spaces in the laminate body of honeycomb units with the paste for bonding layers, taken in parallel with respect to the longitudinal direction.
FIG. 7 shows a general configuration of a thermal conductivity measurement device.
FIG. 8 is a graph showing a relationship between a temperature increasing time and the temperature, obtained from each bonding layer sample having a different heat absorbing material content.

### DESCRIPTION OF THE REFERENCE NUMERALS

22 cell
23 cell wall
24 sealing material
100 honeycomb structure
110 bonding layer
120 coat layer
130 honeycomb unit
140 ceramic block
141 gap
142 spacer
160 laminate body of honeycomb units
500 filling unit
501 tubular body
503a, 503b paste feeders
560 paste for bonding layers
700 thermal conductivity measurement device
701 electric heater
705 magnetic plate
710 sample
720 alumina mat
730 thermo couple

### BEST MODE FOR CARRYING OUT THE INVENTION

Below, embodiments of the present invention will be described. It is noted that in description below, first the present invention is described with a honeycomb structure used in a diesel particulate filter (DPF) which catches particulates included in an exhaust gas, as an example. However, it is obvious to the person skilled in the art that a honeycomb structure according to the present invention may also be used in a catalyst support, as will be described later.

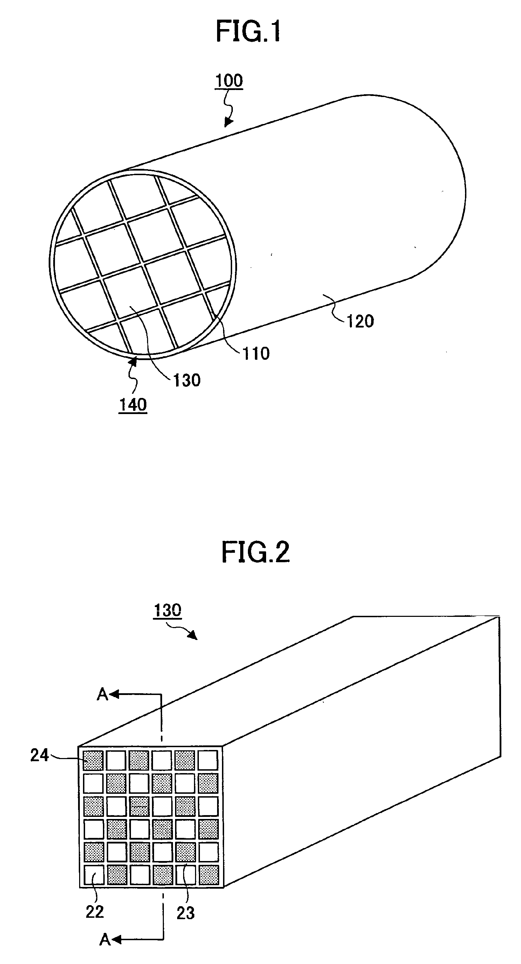

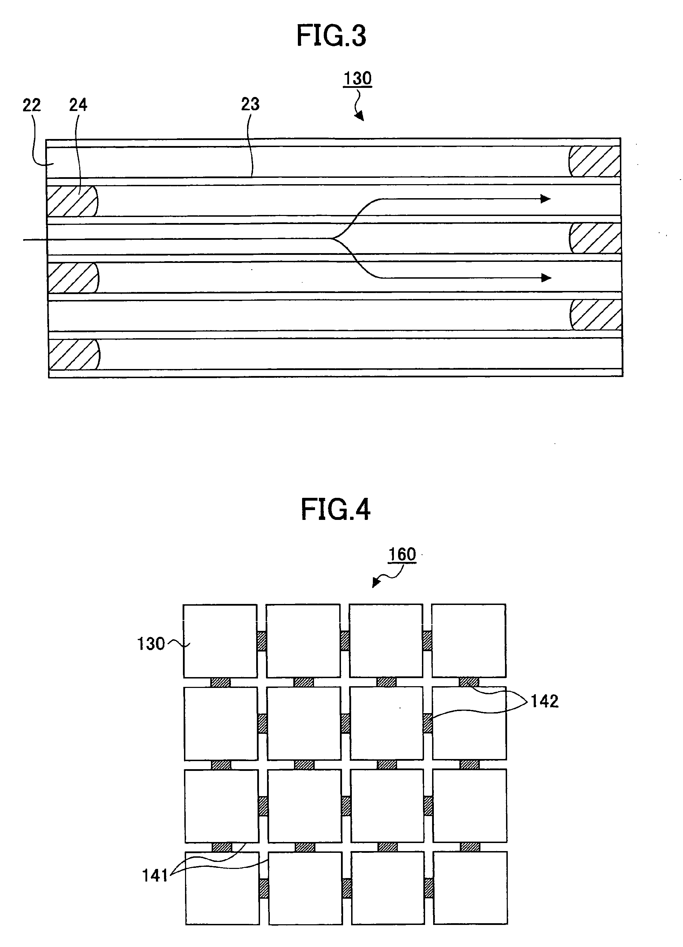

FIG. 1 schematically shows a view of one example of a honeycomb structure according to the present invention. FIG. 2 schematically shows an example of a honeycomb unit configuring a honeycomb structure according to the present invention. Further, FIG. 3 shows an A-A sectional general view of the honeycomb unit of FIG. 2.

As shown in FIG. 1, the honeycomb structure 100 has a ceramic block 140 having two openings and an outer peripheral part which connects both openings; and a coat layer 120 which is provided on an outer peripheral part of the ceramic block 140. In an ordinary case, the coat layer 120 is provided throughout the entire length on the outer peripheral surface of the ceramic block 140 for the purpose of shaping an outer peripheral shape of the honeycomb structure 100, for the purpose that the coat layer 120 functions as a reinforcement member, and functions as a sealing material.

The ceramic block 140 is configured, for example, as a result of a plurality of (in a case of FIG. 1, total 16 pieces of 4 pierces in vertical by 4 pieces in a horizontal direction) pillar-shaped ceramic honeycomb units 130 shown in FIG. 2 being bonded by interposing bonding layers 110, and then, the outer peripheral part thereof being machined for a predetermined shape (in the example of FIG. 1, for a cylindrical shape).

As shown in FIG. 2, the honeycomb unit 130 has a plurality of cells 22 extending along a longitudinal direction, from one end to the other end, and cell walls 23 defining the cells. Further, as shown in FIG. 3, each cell 22 is sealed by a sealing material 24 at any end. Accordingly, an exhaust gas flowing into a first one of the cells 22 is discharged from another one, necessarily after passing through any cell wall 23 defining the first cell. Particulates included in the exhaust gas are caught by the cell walls of the honeycomb unit during the exhaust gas flowing, and thus, the exhaust gas is purified.

It is noted that the honeycomb structure 100 and the ceramic block 140 shown in FIG. 1 have a cylindrical shape. However, a honeycomb structure and a ceramic block according to the present invention are not particularly limited to a cylindrical shape, as long as they have a pillar shape. For example, any shapes such as a cylindroid shape, a rectangular pillar shape or such.

It is noted that the honeycomb unit 100 according to the present invention is characterized in that at least one part from among the honeycomb unit 130, the bonding layers 110 and the coat layer 120 contains a heat absorbing material.

It is noted that, the expression that the honeycomb unit 'contains a heat absorbing material' includes a meaning, in addition to a meaning that the heat absorbing material is included in a material of the honeycomb unit, that the heat absorbing material layer is formed on the cell wall surface of the honeycomb unit, and that the heat absorbing material exists in the cell of the honeycomb unit.

Further, 'heat absorbing material' means a material which thermally decomposes when a certain temperature zone is exceeded, and, when it thermally decomposes, it absorbs heat from the inside of the honeycomb structure. As such a 'heat absorbing material', in addition to a material which merely controls a temperature rise inside of the honeycomb structure thanks to heat absorbing upon thermal decomposition, a material which has an effect of controlling a temperature rise inside of the honeycomb structure thanks to a by-product such as water generated as a result of thermal decomposition is included.

In an ordinary case, even when it is exposed to a high temperature environment such that a temperature of the honeycomb structure may suddenly increase, such a heat absorbing material itself absorbs the heat, and also, it consumes the heat of the honeycomb structure as a result of it thermally decomposing. Thereby, a sudden temperature rise of the honeycomb structure is moderated, ands thus, a slope of a temperature rise can be controlled.

Accordingly, as the honeycomb structure includes the heat absorbing material, it is possible to reduce such a problem that, upon such regeneration treating of the DPF that the temperature of the honeycomb structure locally increases to 500°C through 1000°C, the temperature of the honeycomb structure locally increases suddenly and the honeycomb structure is damaged at the corresponding portion.

It is preferable that the heat absorbing material included in the honeycomb structure is of such a material that it provides heat absorbing property in a temperature zone which is higher than a common temperature of a exhaust gas (up to 200°C). Thereby, the above-mentioned heat absorbing property of the heat absorbing material can be provided only when the honeycomb structure is used in such an environment that the temperature of the honeycomb structure becomes a high temperature, for example, upon regeneration treating. Further, in this case, it is possible to prevent the heat absorbing material from adversely affecting performance of the DPF or the catalyst support, upon operation in an ordinary exhaust gas flowing environment, i.e., when the honeycomb structure is used as the DPF or the catalyst support.

Further, it is preferable that the honeycomb structure includes a plurality of sorts of heat absorbing materials having different heat absorbing temperature zones, respectively. Thereby, it is possible to prevent a temperature of the honeycomb structure from increasing suddenly for a wider temperature range.

Although the heat absorbing material which may be used for the honeycomb structure is not particularly limited to, it may be, for example, aluminum hydroxide, calcium aluminate, dawsonite, magnesium hydroxide, zinc borate, calcium hydroxide, kaolin clay, calcium carbonate, barium oxalate, or such. It is noted that a heat absorbing starting temperature of aluminum hydroxide, calcium aluminate and dawsonite is approximately 200°C through 300°C, a heat absorbing starting temperature of magnesium hydroxide and zinc borate is approximately 300°C through 400°C, and a heat absorbing starting temperature of calcium hydroxide is approximately 400°C through 500°C, a heat absorbing starting temperature of kaolin clay is approximately 500°C, a heat absorbing starting temperature of calcium carbonate is approximately 800°C through 900°C, and heat absorbing starting temperatures of barium oxalate are around 140°C, around 350°C and around 720°C (decomposition reactions in the three stages).

Accordingly, for example, when any one material selected from aluminum hydroxide, calcium aluminate and dawsonite, any one material selected from magnesium hydroxide and zinc borate, and calcium hydroxide are added to the honeycomb structure, it is possible to moderate a temperature rise of the honeycomb structure for a wide temperature range from approximately 200°C (through 300°C) through 500°C. Further, when calcium carbonate and/or barium oxalate are further added to the honeycomb structure, it is possible to obtain a temperature moderating effect of the honeycomb structure also for a further higher temperature range.

A member containing the heat absorbing material is not particularly limited, and, the heat absorbing material may be contained in any member included in the honeycomb structure, such as the honeycomb units (more accurately, the cell walls of the honeycomb units), the bonding layers, the coat layer and so forth. Further, it is also possible that, in each member, one or more heat absorbing materials of different sorts may be contained. That is, for example, in the honeycomb units , a first heat absorbing material is contained, a second heat absorbing material different from the first heat absorbing material is included in the bonding layers, and so forth. However, as will be described later, when the honeycomb structure is used as a catalyst support, it is preferable that the heat absorbing material is added to a member(s) other than the honeycomb units, for the purpose of preventing supporting of a catalyst by the cell walls from being affected.

Further, a content of the heat absorbing material is not particularly limited. However, when the bonding layers include the heat absorbing material, the content of the heat absorbing material should preferably be in a range between approximately 0.5 weight percent and 9.0 weight percent with respect to the bonding layers. In the same way, when the coat layer includes the heat absorbing material, a content of the heat absorbing material should preferably be in a range between approximately 0.5 weight percent and 9.0 weight percent with respect to the coat layer. When the honeycomb units include the heat absorbing material, a content of the heat absorbing material should preferably be in a range between approximately 0.5 weight percent and 9.0 weight percent with respect to the honeycomb units. In such a case, as will be described later, it is possible that the honeycomb structure has a very significant temperature rise preventing effect, and also, it is possible to avoid such a problem which may otherwise occur when a large amount of the heat absorbing material is added, that handling property (especially, coating property) when these members are manufactured may degrade.

Ordinarily, the honeycomb unit 130 is configured by a porous ceramic. However, the present invention may include one or more sorts of the heat absorbing materials as additives thereto. As the porous ceramic material, for example, a nitride ceramic such as aluminum nitride, silicon nitride, boron nitride and titanium nitride, a carbide ceramic such as silicon carbide, zirconium carbide, titanium carbide, tantalum carbide and tungsten carbide, an oxide ceramic such as alumina, zirconia, cordurite, mullite, silica and aluminum titanate, or such, may be used. Further, the honeycomb unit 130 may be configured by a composite material, i.e., for example, a composite material of silicon and silicon carbide. When the composite material of silicon and silicon carbide is used, it is preferable that silicon is added in such a manner that silicon is in 5 through 45 weight percent of the entirety.

As the above-mentioned porous ceramic material, a silicon carbide base ceramic having high heat resistance, superior mechanical property, and high heat conductivity is preferable. It is noted that the silicon carbide base ceramic means a ceramic having equal to or more than 60 weight percent of silicon carbide. In a case of a one-piece-type honeycomb structure in which the honeycomb structure is configured by a single honeycomb unit, cordurite or aluminum titanate having superior thermal shock property is preferable.

An average pore diameter of the honeycomb unit is not particularly limited. However, when particulates are caught, a preferable lower limit is 1 µm, and a preferable upper limit is 100 µm. When the average pore diameter is less than 1 µm, a pressure loss increases. On the other hand, when the average pore diameter exceeds 100 µm, particulates pass through the pores, the particulates cannot be caught, and thus, particulate catching efficient may degrade.

A porosity of the honeycomb unit is not particularly limited. However, a preferable lower limit is 20%, and a preferable upper limit is 80%. When the porosity is less than 20%, clogging may occur in the honeycomb structure soon when particulates are caught. When the porosity exceeds 80%, the strength of the honeycomb structure is low, and thus, it may be easily broken. It is noted that the above-mentioned porosity may be measured by means of a conventional well-known method, for example, a mercury penetration method, an Archimedes method, measurement with the use of a scanning electron microscope (SEM), or such.

An aperture ratio of the honeycomb unit is not particularly limited. However, a preferable lower limit is 50% and a preferable upper limit is 80%. When the aperture ratio is less than 50%, a pressure loss increases. When it exceeds 80%, the strength of the honeycomb structure may degrade.

Further, a preferable lower limit of a thickness of the cell walls of the honeycomb unit is 0.1 mm, and a preferable upper limit thereof is 0.5 mm. A more preferable upper limit is 0.35 mm. When the thickness of the cell walls is less than 0.1 mm, the strength of the honeycomb unit may degrade too much. On the other hand, when the thickness of the cell walls of the honeycomb unit exceeds 0.5 mm, a pressure loss may increase too much, and also, a heat capacity of the honeycomb structure increases, whereby, when a catalyst is supported, it may not be possible to purify an exhaust gas immediately after starting up of an engine.

More preferably, the sealing material 24 and the cell walls 23 of the honeycomb unit 130 should be made of the same porous ceramic. Thereby, it is possible to increase bonding strength therebetween, and also, it is possible to achieve matching between the coefficient of thermal expansion of the cell walls and the coefficient of thermal expansion of the sealing material 24 as a result of the porosity of the sealing material is adjusted in the same way as that of the cell walls, whereby, it is possible to prevent a gap from occurring between the sealing material 24 and the cell walls 23, and to prevent a crack from occurring in the sealing material or in the cell walls at which the cell walls contact the sealing material 24, due to a heat stress upon manufacturing or operation.

A thickness of the sealing material 24 is not particularly limited. However, when the sealing material 24 is made of porous silicon carbide, a preferable lower limit is 1 mm, a preferable upper limit is 20 mm, a more preferable lower limit is 3 mm and a more preferable upper limit is 10 mm.

Ordinarily, the bonding layers 110 of the honeycomb structure 100 are configured by inorganic fibers and an inorganic binder. According to the present invention, it is possible to add thereto the above-mentioned one or more sorts of heat absorbing materials. As the inorganic fibers, for example, ceramic fibers, whiskers, or such, such as silica-alumina, mullite, alumina, silica and aluminum borate whiskers may be used. These may be used alone, or may be used in such a manner that two or more thereof are used together. From among the inorganic fibers, silica-alumina fibers are preferable.

It is preferable that a lower limit of an aspect ratio of the inorganic fibers included in the bonding layers 110 is 3. When the aspect ratio is equal to or more than 3, contact between the inorganic fibers and the inorganic binder increases, and as a result, bonding strength improves. An upper limit of the aspect ratio should preferably be 50. When the aspect ratio exceeds 50, voids may occur between the inorganic fibers in the formed bonding layers, and, as a result, sufficient bonding strength may not be obtained. It is noted that the aspect ratio is calculated by (average fiber length of the inorganic fibers)/(average fiber diameter of the inorganic fibers). A preferable lower limit of the average fiber diameter of the inorganic fibers is 55 µm, a more preferable lower limit is 6 µm, a preferable upper limit is 200 µm, and a more preferable upper limit is 100 µm. A preferable lower limit of the average fiber length of the inorganic fibers is 18 µm, a more preferable lower limit is 20 µm, a preferable upper limit is 5000 µm, and a more preferable upper limit is 2000 µm.

A content of the inorganic fibers included in the bonding layers 110 should preferably be equal to or more than 30 weight percent, and more preferably, equal to or more than 35 weight percent. Further, the content of the inorganic fibers is preferably equal to or less than 50 weight percent, and more preferably, equal to or less than 45 weight percent.

As the inorganic binder included in the bonding layers 110, for example, silica sol, alumina sol, or such should preferably be used. These may be used alone, or two or more thereof may be used together. Among the inorganic binders, silica sol is preferable. A content of the inorganic binder should preferably be equal to or more than 10 weight percent, and more preferably, it should be equal to or more than 15 weight percent. Further, the content of the inorganic binder should preferably be equal to or less than 30 weight percent, and more preferably, it should be equal to or less than 25 weight percent.

Further, the bonding layers may include inorganic particles. As the inorganic particles, for example, carbide, nitride or such may be used. Specifically, inorganic powder made of silicon carbide, silicon nitride, boron nitride, or such, may be used. These may be used alone, or two or more thereof may be used together. From the inorganic participles, silicon carbide having superior thermal conductivity is preferable.

Further, the bonding layers may include an organic binder. By blending the organic binder and adjusting viscosity of a paste for bonding layers, it is possible to improve adhesive property of the paste for bonding layers. Further, it is possible to improve adhesiveness of the bonding layers. A content of the organic binder should preferably be equal to or less than 1.5 weight percent, and more preferably, it should be equal to or less than 1.0 weight percent. Further, viscosity of the paste for bonding layers should preferably be in a range between approximately 20 and 60 Pa·s.

As the organic binder, for example, polyvinyl alcohol, methyl cellulose, ethyl cellulose, carboxymethyl cellulose, or such, may be used. These may be used alone, or, two or more thereof may be used together. From these organic binders, carboxymethyl cellulose is preferable.

Further, to the paste for forming the bonding layers, a pore-forming material such as balloons which are microscopic hollow spheres having an oxide ceramic as their ingredient, spherical acrylic particles, graphite or such, may be added if necessary. As the above-mentioned balloons, there are no specific limitations. For example, alumina balloons, silica-alumina balloons, glass micro balloons, Shirasu balloons, fly ash balloons (FA balloons), or such may be used. Therefrom, silica-alumina balloons are preferable.

Ordinarily, the coat layer 120 of the honeycomb structure 100 is configured by inorganic fibers and an inorganic binder. According to the present invention, one or more sorts of the above-mentioned heat absorbing materials may be added thereto. Especially, the coat layer 120 may be configured by the same material as that configuring the bonding layers 110. In this case, a blending ratio of materials of the coat layer 120 may be the same as that of the bonding layers 110, or, may be different therefrom. Further, the coat layer 120 may be configured by materials different from those of the bonding layers 110.

Further, in the honeycomb structure of the present invention, instead of sealing ends of the cells of the honeycomb unit with the sealing material, or in addition thereto, at least a part of the cell walls may support a catalyst. Such a honeycomb structure may be used as a catalyst support for converting harmful gas ingredients from an exhaust gas, such as CO, HC, and NOx, thanks to a catalyst reaction.

However, when the honeycomb structure of the present invention is used as the catalyst support, it is preferable that the heat absorbing material is not added to the honeycomb units. In other words, when the honeycomb structure is used as the catalyst support, it is preferable that the heat absorbing material is provided to the bonding layers and/or the coat layer. This is because, in the honeycomb units having the heat absorbing material, the catalyst may not properly be supported by the cell walls.

The catalyst to be provided to the cell wall is not particularly limited. However, for example, a catalyst made of a noble metal, such as platinum, palladium, and rhodium, may be used. In addition to these noble metals, a compound containing an alkali metal (periodic table of the elements, group 1), an alkali earth metal (periodic table of the elements, group 2), a rare-earth element (periodic table of the elements, group 3), a transition-metal element or such, may be supported.

Further, when the catalyst is provided to the cell walls of the honeycomb units, the surfaces thereof may be previously coated by catalyst support layers such as alumina. As the catalyst support layers, for example, an oxide ceramic such as alumina, titania, zirconia and silica may be used.

The honeycomb structure configured by the honeycomb units by which the catalyst is supported functions as a gas purifying (converting) unit the same as a catalyst-provided-type DPF in the prior well-known art. Therefore, detailed description for a case where the honeycomb structure of the present invention also functions as the catalyst support, is omitted here.

It is noted that, in the above description, the present invention has been described with the example of the honeycomb structure (so-called 'bonding-type honeycomb structure') configured as a result of the plurality of honeycomb units 130 being bonded by interposing the bonding layers 110 as shown in FIG. 1. However, it will be obvious to the person skilled in the art that the present invention is also applicable to a honeycomb structure (so-called 'one-piece-type honeycomb structure'), other than the above-mentioned one, having no bonding layers 110, but it is produced by an integral molding manner. In a case of such a one-piece-type honeycomb structure, the honeycomb structure has no bonding layers, and thus, the heat absorbing material is added to the cell walls or the coat layer of the honeycomb structure.

Next, a method of producing a honeycomb structure according to the present invention will be described.

First, by the following process, the honeycomb unit is produced.

Extrusion molding is carried out with the use of a raw material paste having the above-mentioned ceramic as a main ingredient, and a molded body having a square-pillar shape or such is produced, which will be the honeycomb unit afterwards. It is noted that when the honeycomb unit including the heat absorbing material is produced, it is preferable that, to the raw material paste, one or more sorts of the above-mentioned heat absorbing materials are added by 5 weight percent through 30 weight percent with respect to the raw material paste. In less than 5 weight percent, the heat absorbing effect may not sufficiently be provided. In more than 30 weight percent, the property (a pore diameter, porosity, strength and so forth) of the honeycomb unit may be affected.

As the raw material paste, it is not particularly limited to, but, it is preferable that porosity of the honeycomb unit after production will be in a range between 20 and 80%. For example, one obtained from adding a binder, a dispersion medium liquid, and so forth, to the above-mentioned powder made of ceramic, is used.

A particle diameter of the ceramic powder is not particularly limited. However, one, which shrinks less in a subsequent firing process, is preferable. For example, one obtained from combining 100 weight parts of powder having an average particle diameter of 0.3 through 70 µm and 5 through 65 weight parts of powder having an average particle diameter of 0.1 through 1.0 µmm, is preferable. Adjustment of the pore diameter and so forth of the honeycomb units can be carried out as a result of a firing temperature and a particle diameter of the ceramic powder being adjusted.

As the binder to be added to the raw material paste, it is not particularly limited to, but, for example, methyl cellulose, carboxymethyl cellulose, hydroxyethyl cellulose, polyethylene glycol, or such, may be used. A blending ratio of the binder should preferably be 1 through 15 weight parts with respect to 100 weight parts of ceramic powder ordinarily.

As the dispersion medium liquid, it is not particularly limited to, but, for example, an organic solvent such as benzene, alcohol such as methanol, water or such, may be used. The above-mentioned dispersion medium liquid is blended in a proper amount such that viscosity of the raw material paste may fall within a certain range.

Further, to the raw material paste, a molding assistant may be added if necessary. As the molding assistant, it is not particularly limited, but, for example, ethylene glycol, dextrin, fatty acid, fatty acid soap, polyvinyl alcohol, or such may be used. Further, to the raw material paste, as is necessary, a pore-forming material such as balloons which are microscopic hollow spheres having an oxide ceramic as an ingredient, spherical acrylic particles, graphite, or such may be added. As the above-mentioned balloons, it is not particularly limited, but, for example, alumina balloons, glass micro balloons, Shirasu balloons, fly ash balloons (FA balloons), mullite balloons or such may be used. Therefrom, alumina balloons are preferable.

These ceramic powder, binder, dispersion medium liquid, molding assistant, pore-forming material (and, if necessary, one or more sorts of the heat absorbing materials) are blended by means of an atriter or such, and are sufficiently kneaded by a kneader or such, and after that, they undergo extrusion molding, and thus, a molded body is produced.

The thus-obtained molded body is dried with the use of a microwave dryer, a hot air dryer, an oven, a dielectric dryer, a reduced-pressure dryer, a vacuum dryer, a freeze dryer, or such. Next, when the honeycomb structure for a DPF is produced, a predetermined amount of a paste for sealing is filled with to one end of each cell of the molded body, which will be the sealing material, and thus, the cells are sealed.

As the paste for sealing, it is not particularly limited, but, for example, one from which the sealing material obtained through a subsequent process will have porosity of 30 through 75 % is preferable. For example, one having the same composition as that of the above-mentioned raw material paste may be used.

Next, to the molded body to which the paste for sealing is filled with, degreasing (for example, at 200 through 500°C), and firing (for example, at 1400 through 2300°C) are carried out in a predetermined condition. Thus, the honeycomb unit can be produced. As the condition for degreasing and firing of the molded body, a condition used in the prior art for producing a filter made of porous ceramic, may be used.

Next, the honeycomb units are bonded by interposing the bonding layers, and thus, the ceramic block is produced. Below, a process of producing the ceramic block will be described in detail with reference to FIGS. 4 through 6.

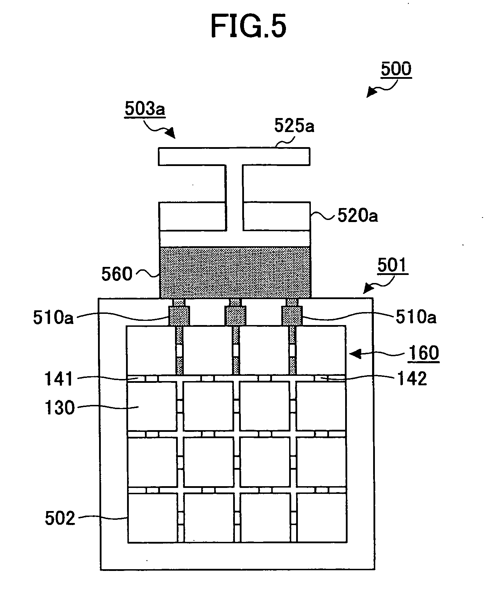

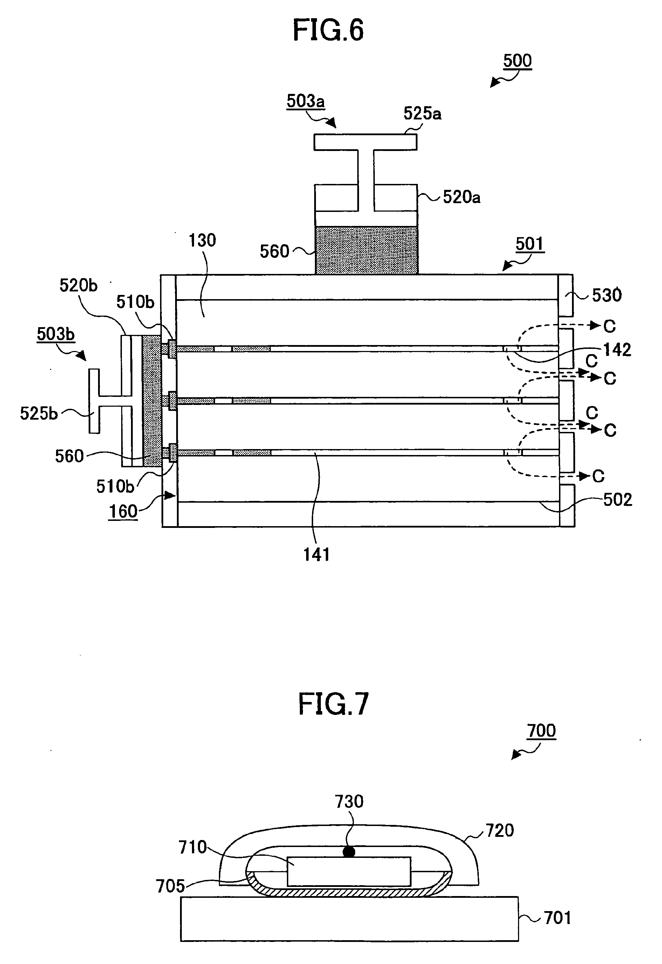

FIG. 4 schematically shows a vertical sectional view, with respect to a longitudinal direction of a laminate body of honeycomb units. FIGS. 5 and 6 show a filling unit used when the paste for bonding layers is filled with. In particular, FIG. 5 shows a vertical sectional view with respect to a longitudinal direction of the filling unit having the laminate body of honeycomb units in its internal space. FIG. 6 shows a parallel sectional view with respect to the longitudinal direction of the filling unit having the laminate body of honeycomb units in its internal space.

As shown in FIG. 4, a plurality of honeycomb units 130 are arranged in parallel in vertical and horizontal directions (in an example of the figure, 4 columns by 4 lines), through spacers 142 provided between the honeycomb units. Accordingly, gaps 141 having a height of the spacers 142 are formed between the honeycomb units.

As a shape of the spacers, it is not particularly limited, and any shape, such as a cylindrical shape, a square-pillar shape, or such, may be used.

As positions of placing the spacers, it is not particularly limited, and, it is preferable to dispose them in the proximity to four corners of a side face of the honeycomb unit.

As a material of the spacers, it is not particularly limited, but, for example, paper, inorganic substance, a ceramic, organic fibers, resin or such may be used. As a specific example of the spacers, for example, cardboard, graphite, silicon carbide or such may be used. Further, the spacers having the same material as that of the bonding layers may be previously solidified with a thickness thereof being adjusted.

Then, in the gaps between the honeycomb units defined by the spacers, the paste for bonding, which will be the bonding layers afterwards, is filled with. It is noted that a material of the paste for bonding has been described in detail above, and thus, description is omitted here. However, when the heat absorbing material is contained in the bonding layers, one or more sorts of the heat absorbing materials are added to the paste for bonding, each in a range between 0.5 weight percent through 15.0 weight percent. Especially, an adding amount of the heat absorbing material should preferably be 0.5 weight percent through 8.0 weight percent.

The filling unit shown in FIGS. 5 and 6 is used for filling with the paste for bonding.

The filling unit 500 has a tubular body 501, a first paste feeder 503a, and a second paste feeder 503b. The tubular body 501 has the above-mentioned inner space 502 which can store the laminate body 160 of honeycomb unit. In other words, the tubular body 501 has four side faces and two end faces for defining the inner space 502. To one of the two end faces (i.e., the end face to which the second paste feeder is not mounted), an openable and closable bottom plate 530 is provided.

The first paste feeder 503a is mounted to one of the four side faces of the tubular body 501, while the second paste feeder 503b is mounted to one of the two end faces of the tubular body 501. The first and second paste feeders 503a and 503b have paste chambers 520a and 520b, respectively, for containing the paste 560. Further, the first and second paste feeders 502a and 503b have, respectively, extrusion mechanisms 525a and 525b for extruding the paste 520 contained in the paste chambers 520a and 520b to the outside thereof. Further, openings are provided to bottom parts of the first and second paste feeders 503a and 503b, respectively.

Further, to the side face and the end face of the tubular body 501 to which the first and second paste feeders 502a and 503b are provided, openings 510a and 510b are provided, and thereby, in a state in which the first and second paste feeders 503a and 503b are provided, the paste chambers 520a and 520b communicate with the inner space 502. Further speaking, the openings 510a and 510b of the tubular body 501 are provided in such sizes and intervals as ones corresponding to positions of the respective gaps 141 of the laminate body 160 of honeycomb units stored in the inner space 502.

With the use of the filling unit 500 configured as described above, the paste for bonding layers are filled with into the gaps 141 of the laminate body 160 of honeycomb units.

After the laminate body 160 of honeycomb units is assembled with the use of the spacers 142, it is stored in the inner space 502 of the tubular body 501. Next, the paste feeders 503a and 503b are mounted to the side face and the end face of the tubular body 501, respectively, and also, the respective paste chambers 520a and 520b thereof are filled with the paste for bonding layers. Next, the extrusion mechanisms 525a and 525b are used, the paste 560 is extruded from the paste chambers 520a and 520b of the paste feeders 503a and 503b, respectively, and the paste for bonding layers extruded from both paste feeders is fed to the inner space 502 through the openings 510a and 510b of the tubular body 501. As described above, the openings 510a and 510b of the tubular body 501 correspond to the gap positions of the laminate body 160 of honeycomb units, respectively. Thus, the paste 560 for bonding layers can be injected into each gap 141.

However, when the paste for bonding layers is filled with into the gaps 141, it is necessary to discharge a gas included in the gaps. Therefore, in an ordinary case, the bottom plate 530 is made of such a material having breathability. Alternatively, as shown in FIG. 6, the bottom plate 530 is configured by an air-tight material having vents. For example, when the bottom plate is configured by the air-tight material having vents, the gas in the gaps 141 passes through the cell walls of the honeycomb units 130, further passes through the vents of the bottom plate 530 and, is discharged from the honeycomb units to the outside, as indicated by arrows C.

It is noted that, a pressure for feeding the paste 560 for bonding layers to the inner space 502 of the tubular body 501 is adjusted appropriately, depending on an amount and viscosity of the paste 560 for bonding layers, sizes, positions and the number of the openings, and so forth. Further, while the paste is fed, suction may be carried out if necessary from the side of the end face which is opposite to the end face to which the paste feeder 502b is mounted (or, from the side of the side face which is opposite to the side face to which the paste feeder 502a is mounted).

Thus, the laminate body of honeycomb units in which the paste for bonding layers having a certain thickness provided in the gaps 141 can be obtained. It is possible to obtain the laminate body of honeycomb units as a result of the paste for bonding layers being coated to the honeycomb units, and the honeycomb units being stacked in sequence.

Next, the laminate body of honeycomb units are heated by such a condition of, for example, 50 through 150°C for one hour, thus, the paste for bonding layers is dried and solidified, and thus, the bonding layers 110 are formed. After that, a diamond cutter or such is used, an outer peripheral part of the ceramic block is cut for predetermined dimensions, and thus, for example, the ceramic block 140 having a cylindrical shape can be obtained.

Next, to an outer peripheral surface (cut surface) of the ceramic block, a paste for the coat layer is provided. After that, the paste for the coat layer is dried and solidified, and thus, the coat layer 120 is formed. The paste for the coat layer may be, for example, one the same as the above-mentioned paste for bonding layers. When the heat absorbing material is contained in the coat layer, one or more sorts of the heat absorbing materials are added to the paste in a range between 0.5 weight percent and 15.0 weight percent for each sort. Especially, an adding amount of the heat absorbing material should preferably be in a range between 0.5 weight percent and 8.0 weight percent.

It is noted that, when the honeycomb structure used as the catalyst support is produced, in the above-mentioned process, instead of the sealing process of the cell ends by means of the sealing material, or in addition thereto, a process of causing a catalyst to be supported by the cell walls of the honeycomb units may be added. This processing of supporting the catalyst may be carried out in any stage of before the honeycomb units are stacked, or after the honeycomb units are bonded together to configure the ceramic block. When the catalyst is supported, for example an alumina film as the catalyst support layer may be formed on the surfaces of the cell walls, and a co-catalyst and the catalyst such as platinum may be provided on the surface of the alumina film.

Below, an effect of the present invention will be described in detail for an embodiment.

### Example 1

### [Confirmation for effect of adding heat absorbing material to bonding layers]

Actually, a sample of the bonding layers to which the heat absorbing material was added was prepared, and a heat absorbing effect thereof was confirmed.

The sample was prepared as follows: That is, first, a predetermined amount of aluminum hydroxide was added to 40 weight percent of alumina fibers having an average fiber diameter of 2 µm, 26 weight percent of silicon carbide particles having an average particle diameter of 0.6 µm, 20 weight percent of silica sol, 1 weight percent of carboxymethyl cellulose (CMC), 6 weight percent of a water retention agent and 7 weight percent of water, and then, they were blended. The adding amount of aluminum hydroxide was changed from 0 through 7 %. Next, this blend was stored in a container, was maintained at 80°C for 6 hours, then at 100°C for 3 hours, and thus, was dried. The dried body was then cut for a thickness of 5 mm and a diameter of 50 mm. Thus, four sorts of samples having different contents of aluminum hydroxide were prepared (samples 1A through 1D). An actual amount of aluminum hydroxide included in each sample was, as shown in Table 1 below, in a range between 0 through 6.5 wt%.

**Table 1**

| SAMPLE | 1A | 1B | 1C | 1D |
|---|---|---|---|---|
| ALUMINUM HYDROXIDE ADDING AMOUNT TO PASTE (wt %) | 0 | 3.0 | 6.0 | 7.0 |
| ALUMINUM HYDROXIDE CONTENT IN SAMPLE (wt %) | 0 | 2.9 | 5.7 | 6.5 |

Next, measurement of thermal conductivity was carried out with the use of these samples 1A through 1D. In the measurement of thermal conductivity, a thermal conductivity measurement device 700 shown in FIG. 7 was used. First, a magnetic plate 705 was placed on an electric heater 701, and the sample 710 was provided therein. Further, a thermo couple 730 was provided in such a manner that the thermo couple 730 comes in contact with a surface of the sample 710. Further, an alumina mat 720 was placed on the magnetic plate 705, and therewith, the entirety of the magnetic plate 705 was covered. In this state, power supply to the electric heater 701 was turned on, the magnetic plate 705 was heated to a temperature of 480°C, and during the time, a temperature change of the sample 710 was measured.

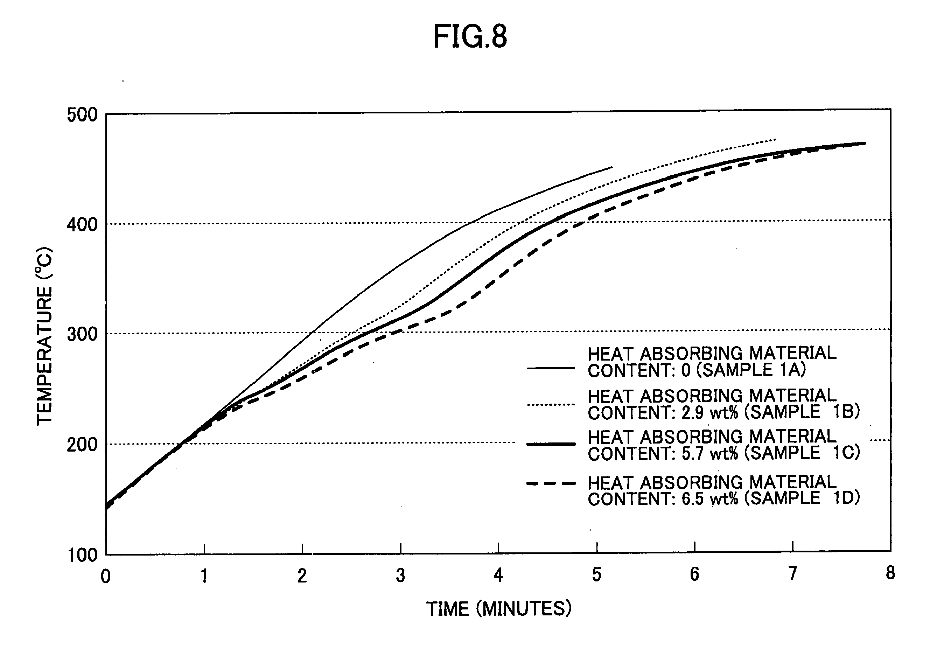

FIG. 8 shows results. As shown, in the samples 1B through 1D in which aluminum hydroxide was included, temperature rising curves are low. Therefrom, it is seen that aluminum hydroxide acted as a heat absorbing material, a sudden temperature rise could be avoided, thus a temperature rise was moderated, and thereby, a temperature rise of the sample was controlled. Especially, the effect of controlling a temperature rise was more conspicuous as a content of aluminum hydroxide included in the sample increased.

### Example 2

### [Evaluation of coating property of bonding layers including heat absorbing material]

Next, coating property of the bonding layers including the heat absorbing material was evaluated. Evaluation of coating property was carried out as a result of the paste for bonding layers, to which a predetermined heat absorbing material was added, being actually coated on side faces of the honeycomb units, and the ceramic block being produced.

First, the honeycomb units were prepared by the following method:
7000 weight parts of α-silicon carbide powder having an average particle diameter of 10 µm and 3000 weight parts of α-silicon carbide powder having an average particle diameter of 0.5 µm were blended in a wet blending manner, 570 weight parts of an.organic binder (methyl cellulose) and 1770 weight parts of water were added to the thus-obtained 10000 weight parts of blend, then they were kneaded, and thus, a blend composition was obtained. Next, to the blend composition, 330 weight parts of a plasticizer (UNILUBE made by NOF corporation, Japan) and 150 weight parts of (glycerin) as a lubricant was added, then, they were further kneaded, after that, extrusion molding was carried out, and thus, a molded body of a honeycomb unit having a square-pillar shape shown in FIG. 2 was formed.

Next, with the use of a microwave dryer or such, the thus-produced molded body was dried, and after that, the paste for a sealing material having the same composition as that of the molded body was filled with into predetermined cells. Next, again the dryer was used to dry it, after that, degreasing was carried out at 400°C, and firing was carried out at 2200°C for 3 hours in an argon atmosphere at normal pressure. Thereby, the honeycomb unit made of a sintered body of silicon carbide was produced. This honeycomb unit had a vertical dimension of 34.3 mm, a horizontal dimension of 34.3 mm and a length of 150 mm, porosity of 42%, and an average pore diameter of 11 µm. Further, the number of cells was 46.5 pieces/cm² (300 cpsi), and a thickness of the cell walls 23 was 0.25 mm.

Next, the paste for bonding layers was prepared.

0.5 weight percent of aluminum hydroxide was added to a blend liquid including 40 weight percent of alumina fibers having an average fiber diameter of 2 µm, 26 weight percent of silicon carbide particles having an average particle diameter of 0.6 µm, 20 weight percent of silica sol, 1 weight percent of carboxymethyl cellulose (CMC), 6 weight percent of a water retention agent and 7 weight percent of water, and thus, a paste 2A for bonding layers was prepared. Viscosity of the paste 2A for bonding layers was 34.1 × 10³ Pa·s at room temperature.

In the same way, a paste 2B for bonding layers was prepared in which 1.0 weight percent of aluminum hydroxide was added. Viscosity of the paste 2B for bonding layers was 34.2 × 10³ Pa·s at room temperature.

In the same way, a paste 2C for bonding layers was prepared in which 3.0 weight percent of aluminum hydroxide was added. Viscosity of the paste 2C for bonding layers was 40.4 × 10³ Pa·s at room temperature.

In the same way, a paste 2D for bonding layers was prepared in which 6.0 weight percent of aluminum hydroxide was added. Viscosity of the paste 2D for bonding layers was 49.0 × 10³ Pa·s at room temperature.

In the same way, a paste 2E for bonding layers was prepared in which 8.0 weight percent of aluminum hydroxide was added. Viscosity of the paste 2E for bonding layers was 58.1 × 10³ Pa·s at room temperature.

In the same way, a paste 2F for bonding layers was prepared in which 10 weight percent of aluminum hydroxide was added. Viscosity of the paste 2F for bonding layers was 72.4 × 10³ Pa·s at room temperature.

In the same way, a paste 2G for bonding layers was prepared in which 15 weight percent of aluminum hydroxide was added. Viscosity of the paste 2G for bonding layers was 84.2 × 10³ Pa·s at room temperature.

In the same way, a paste 2H for bonding layers was prepared in which no aluminum hydroxide was added. Viscosity of the paste 2H for bonding layers was 36.6 × 10³ Pa·s at room temperature. These viscosities were measured with the use of a viscosity meter PC-1TL (made by MALCOM Co. Ltd., Japan).

Next, these pastes for bonding layers were actually provided to side faces of the honeycomb unit, thus the bonding layer was formed, and therewith, coating property of the paste for bonding layers including the heat absorbing material was evaluated.

First, in the proximity of the four corners of a side face of the honeycomb unit, total four spacers were placed, one for each corner, each made of cardboard having adhesive coated to both sides thereof. Specifically, the spacers were placed at such positions that the minimum distance between an outer peripheral part of the spacer and the two sides forming the corner of the side face of the honeycomb unit may be 6.5 mm each. The spacer had a cylindrical shape having such dimensions of a diameter of 5 mm and a thickness of 1 mm. Next, through these spacers, 4 pieces in a vertical direction by 4 pieces in a horizontal direction of honeycomb units were bonded together, and thus, a laminate body of the honeycomb units was assembled.

Next, as will be described below, a filling unit such as that shown in FIGS. 5 and 6 was used, the above-mentioned paste for bonding layers was filled with into gaps, which were defined in the laminate body of the honeycomb units as a result of the spacers being inserted therebetween.

First, in the inner space (145 mm in a vertical direction by 145 mm in a horizontal direction by 150 mm in length) of the tubular body (having four side faces and two end faces), the laminate body of the honeycomb units was placed. It is noted that this filling unit has the first paste feeder provided to one side face of the tubular body and the second paste feeder provided to one end face of the tubular body. Further, in the tubular body of the filling unit, openings were provided, having a width of 5 mm, for communicating between the inner space of the tubular body and the paste chamber of each paste feeder, at positions corresponding to the respective gaps formed in the collected body of the honeycomb units. Further, the opening and closable breathable bottom plates was provided to an end of the filling unit, opposite to an end to which the second paste feeder was provided, and, the bottom plate was closed after the laminate body of the honeycomb units was provided in the inner space.

The paste for bonding layers prepared by the above-described method was filled with into the paste chambers of the respective paste feeders. Further, from the first paste feeder (from the side of the side face of the laminate body of the honeycomb units), a pressure of 1.1 Kg/cm² was applied, while no pressure was applied from the second paste feeder (from the side of the end face of the laminate body of the honeycomb units), and the paste was extruded from the respective paste chambers. By this operation, through the respective openings, the paste was extruded in both directions (the direction perpendicular to the longitudinal direction of the honeycomb units and the longitudinal direction), and thus, the paste for bonding layers was filled with into the gaps formed in the laminate body of the honeycomb units.

Next, the laminate body of the honeycomb units into which the paste for bonding layers was thus filled with, underwent drying processing at 100°C for 1 hour, the paste for bonding layers was thus solidified, and thus, the bonding layers having a thickness of approximately 1 mm were formed.

Table 2 shows adding amounts of aluminum hydroxide to the pastes, ratios of solid in the pastes, viscosities of the pastes when the pastes 2A through 2H for bonding layers were prepared, concentrations of aluminum hydroxide actually contained in the thus-obtained bonding layers, and evaluation results for coating property.

**Table 2**

| SAMPLE | ALUMINIUM HYDROXIDE ADDING AMOUNT (wt %) | RATE OF SOLID (wt %) | VISCOSITY (× 10³ Pa·s) | ALUMINIUM HYDROXIDE CONTENT (wt %) | FILLING AND COATING PROPERTY |
|---|---|---|---|---|---|
| 2A | 0.5 | 72.2 | 34.1 | 0.5 | GOOD |
| 2B | 1.0 | 72.3 | 34.2 | 1.0 | GOOD |
| 2C | 3.0 | 72.5 | 40.4 | 2.9 | GOOD |
| 2D | 6.0 | 73.0 | 49.0 | 5.6 | GOOD |
| 2E | 8.0 | 73.5 | 58.1 | 7.4 | GOOD |
| 2F | 10.0 | 74.1 | 72.4 | 9.1 | LOW |
| 2G | 15.0 | 75.2 | 84.2 | 13.0 | LOW |
| 2H | 0 | 76.4 | 36.6 | 0 | GOOD |

When the pastes 2A through 2E for bonding layers were used in a process of providing the bonding layers, the pastes for bonding layers could be filled with into the gaps between the honeycomb units without any problem, as in the case of the ordinary paste 2H for bonding layer. On the other hand, when the pastes 2F and 2G for bonding layers were used, viscosities of the pastes increased, and thus, long times were required for the completions of coating the pastes into the gaps formed in the laminate body of the honeycomb units. When the laminate bodies of the honeycomb units were produced in such a method of coating the pastes for bonding layers to the honeycomb units and stacking the honeycomb units in sequence, 2A through 2E had satisfactory results, while 2F and 2G had insufficient coating properties, and thus, there were some areas in which the pastes for bonding layers did not spread satisfactorily when the honeycomb units were stacked.

From the above results, it can be said that, in a view point of handling property of the pastes (filling property, coating property and so forth), it is more preferable that an amount of the heat absorbing material included in the bonding layers falls within a range of equal to or more than 0.5 weight percent and less than 9.1 weight percent.

It is noted that, although the examples in which aluminum hydroxide was added as the heat absorbing material to the pastes for bonding layers have been described, it can be expected that the same result will also be obtained when the cell walls or the coat layer contain aluminum hydroxide. Further, even if a heat absorbing material other than aluminum hydroxide is used, it can be expected that, a sudden temperature rise' in the honeycomb structure can be avoided, merely with a difference in a temperature zone for which the heat absorbing material functions.

## Claims

1. A honeycomb structure having a ceramic block having two ends, configured as a result of a plurality of honeycomb units, comprising cell walls which define a plurality of cells which extend from one end to the other end, being bonded by interposing bonding layers, and a coat layer provided on an outer peripheral surface of the ceramic block, wherein:
a plurality of heat absorbing materials are provided to at least one part selected from among the cell walls, the coat layer and the bonding layers.

2. A honeycomb structure having two ends and an outer peripheral surface, comprising cell walls which define a plurality of cells which extend from one end to the other end, and a coat layer provided on an outer peripheral surface, wherein:
at least one from between the cell walls and the coat layer has a plurality of heat absorbing materials.

3. The honeycomb structure as claimed in claim 1 or 2, wherein:
said plurality of heat absorbing materials include two or more selected from among a group including ammonium hydroxide, calcium aluminate, dawsonite, magnesium hydroxide, zinc borate, calcium hydroxide, kaolin clay, calcium carbonate and barium oxalate.

4. The honeycomb structure as claimed in any one of claims 1-3, wherein:
at least one of the plurality of heat absorbing materials is contained in a range between 0.5 and 9.0 weight percent with respect to the cell walls, the coat layer or the bonding layers.

## Amended claims

### Amended claims in accordance with Rule 137(2) EPC.

**1.** A honeycomb structure (100) having a ceramic block having two ends, configured as a result of a plurality of honeycomb units (130), comprising cell walls (23) which define a plurality of cells (22) which extend from one end to the other end, being bonded by interposing bonding layers (110), and a coat layer (120) provided on an outer peripheral surface of the ceramic block (140), wherein:
a plurality of heat absorbing materials are provided to at least one part selected from among the cell walls (23), the coat layer (120) and the bonding layers (110).

**2.** A honeycomb structure (100) having two ends and an outer peripheral surface, comprising cell walls (23) which define a plurality of cells (22) which extend from one end to the other end, and a coat layer (120) provided on an outer peripheral surface, wherein:
at least one from between the cell walls (23) and the coat layer (120) has a plurality of heat absorbing materials.

**3.** The honeycomb structure (100) as claimed in claim 1 or 2, wherein:
said plurality of heat absorbing materials include two or more selected from among a group including ammonium hydroxide, calcium aluminate, dawsonite, magnesium hydroxide, zinc borate, calcium hydroxide, kaolin clay, calcium carbonate and barium oxalate.

**4.** The honeycomb structure (100) as claimed in any one of claims 1-3, wherein:
at least one of the plurality of heat absorbing materials is contained in a range between 0.5 and 9.0 weight percent with respect to the cell walls (23), the coat layer (120) or the bonding layers (110).
